# EUROPEAN PATENT APPLICATION

(11) **EP 2 360 765 A1**
(43) Date of publication of application: **24.08.2011**
(21) Application number: 09827531.6
(22) Date of filing: 16.11.2009
(51) Int. Cl.: H01M 8/04, H01M 8/06, H01M 8/14

(54) **HYDROGEN-RECYCLING MCFC POWER-GENERATING SYSTEM**

(30) Priority: 18.11.2008 JP 2008294107
(71) Applicant: Tokyo Gas Co., Ltd., Tokyo 105-8527 (JP)
(72) Inventor: UEMATSU Hiroyoshi, Yokohama-shi Kanagawa 241-0002 (JP); KAMEYAMA Hiromichi, Tokyo 105-8527 (JP); WATANABE Akimune, Tokyo 110-0016 (JP)
(74) Representative: Strehl Schübel-Hopf & Partner
(86) International application number: PCT/JP2009/069430
(87) International publication number: WO 2010/058750

(57) **Abstract**

Provided is a hydrogen-recycling MCFC power-generating system that can improve power generation efficiency by effectively utilizing fuel gas having the hydrogen included in anode exhaust as the main component, and that can reduce the amount of carbon dioxide discharged by separating and recovering the carbon dioxide. The system is provided with a molten carbonate fuel cell (9), a carbon dioxide separating system (20) that separates and recovers a portion of the carbon dioxide from the anode exhaust (AE) from the fuel cell, a gas mixer that mixes recycled fuel gas (RF) after a portion of the carbon dioxide has been separated from the anode exhaust with new fuel gas (F) that is supplied from outside to make a mixed fuel gas (MF), a fuel gas heater (13) that diverts a portion of the mixed fuel gas, preheats it to a constant temperature and adds reforming steam (STM), and a multistage pre-converter (14) that performs a reforming reaction and a methanation reaction of the mixed fuel gas simultaneously. The mixed fuel gas exiting the multistage pre-converter is supplied to the anode (A) of the fuel cell.

## Description

### Technical Field

The present invention belongs to the field of energy conversion equipment, and relates to a fuel cell, which directly transforms chemical energy that fuel gas contains into electricity. In particular, the subject of the present invention is to increase the power generation efficiency of molten carbonate fuel cells (MCFC), while providing improvement to the system, to make recovery of CO₂ easier, and further contributing to the effective use of energy resources and improvement of earth environment.

### Background Art

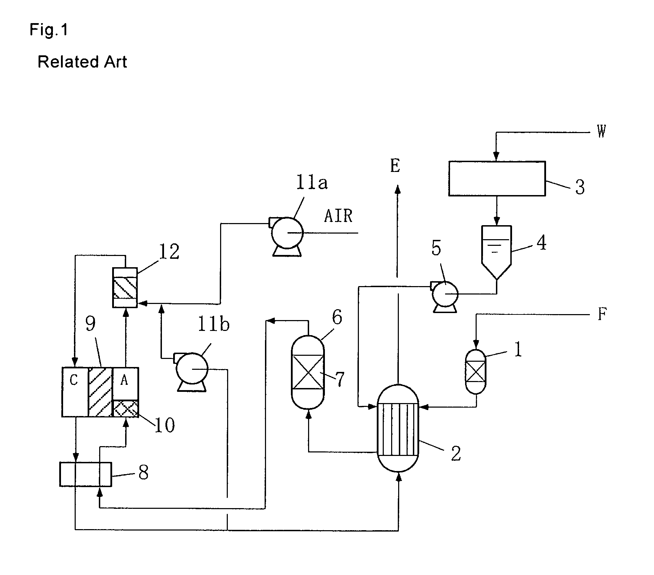

Fig. 1 is a flow chart of a conventional internal reforming MCFC power generation system.
Externally-supplied new fuel gas F, such as urban gas, is first sent to a desulfurizer 1, and after removal of its sulfur content, the new fuel gas is sent to a fuel humidifier 2. The fuel humidifier 2 is a heat exchanger, which sprays and evaporates treated water into fuel gas, while at the same time, heats new fuel gas F using cathode exhaust of the molten carbonate fuel cell. Water supply W is pretreated by a water treatment equipment 3, and is supplied to the fuel humidifier 2 by a pump 5 via a treated water tank 4.
The mixed gas of hot fuel gas and vapor exiting the fuel humidifier 2 is then led to a pre-converter 6. The pre-converter 6 is a container containing a reforming catalyst 7, and hydrocarbon gas in the fuel gas is partly reformed. The pre-converter outlet gas is supplied to a fuel cell 9, following heat exchange with cathode exhaust in a fuel gas heater 8.

Since an internal reforming fuel cell 9 incorporates an internal reformer 10, reforming of the fuel gas supplied to the fuel cell 9 is carried out by the internal reformer 10, and transformed into gas consisting mainly of H₂ and CO; however, since the reforming catalyst is also arranged along the anode gas passage, reforming reaction and power generation reaction occur concurrently at the anode. Although about 70% of the total amount of H₂ and CO generated by the fuel cell 9 is utilized in the power generation reaction, the remainder is discharged from the fuel cell 9 as an anode exhaust.

The anode exhaust containing combustible components is mixed with air supplied by an air blower 11a, and is then led to a catalyst oxidizer 12, whereby the inflammable components in the anode exhaust is oxidized. Air is preheated by this oxidation reaction, while at the same time, carbon dioxide contained in the anode exhaust is added to air, and then led to the cathode. At the cathode, carbon dioxide and oxygen are partly consumed by the power generation reaction, and exit the cathode. The working temperature of the fuel cell 9 is around 600 °C. After providing heat to the fuel gas in the fuel gas heater 8, cathode exhaust that exits the fuel cell 9 is partly recycled to the cathode by a recycling blower 11b, and the remainder is emitted to the atmosphere after providing heat to the fuel side in the fuel humidifier 2.

In addition, for example, patent documents 1-3 are disclosed as a related art relevant to the present invention.
Patent documents 1 and 2 are related to combined power generation by molten carbonate type fuel cell and gas turbine, while patent document 3 relates to a production method of the synthesized gas using oxygen permeation film.

### Related Art Documents

### Patent documents

Patent document 1: JP-A-H11-176455, "FUEL CELL COMPOSITE POWER GENERATING DEVICE"
Patent document 2: JP-A-2004-071279, "FUSED CARBONATE FUEL CELL POWER GENERATION SYSTEM, AND POWER GENERATION METHOD IN SYSTEM"
Patent document 3: JP-A-2003-183004, "METHOD FOR MANUFACTURING SYNTHETIC GAS, AND SYSTEM FOR MANUFACTURING LIQUID FUEL AND SYSTEM FOR GENERATING FUEL CELL-ELECTRIC POWER UTILIZING THIS"

In the above-described conventional internal reforming MCFC power generation system, the fuel gas, which contains hydrogen as its main component, in the anode exhaust is combusted in order to preheat air. Hence, there was a problem that power generation efficiency was low.
Moreover, although part of the carbon dioxide contained in the anode exhaust is used in the power generation reaction, most are emitted into the atmosphere with the cathode exhaust.

Therefore, the conventional internal reforming MCFC power generation system had low power generation efficiency, and was problematic in that carbon dioxide was unrecoverable.

### Summary of the Invention

### Technical Problem to be Solved by the Invention

The present invention was invented in order to solve the above-described conventional problems. That is, the subject of the present invention is to provide a hydrogen-recycling MCFC power-generating system, which can make effective use of the fuel gas, whose main component is hydrogen, contained in the anode exhaust, and raise power generation efficiency, while enabling separation and collection of carbon dioxide, thereby reducing the amount of carbon dioxide discharge.

### Means to Solve the Problem

According to the present invention, a hydrogen-recycling MCFC power-generating system,comprising:
a molten carbonate fuel cell;
a carbon dioxide separation system that divides anode exhaust of the fuel cell into carbon dioxide to be collected, recycle carbon dioxide that is to be recycled, and remaining recycled fuel gas;
a fuel gas heater, which diverges part of a mixed fuel gas obtained by mixing new fuel gas to the recycled fuel gas, preheats the mixed fuel gas to a certain temperature, and adds reforming steam;
a fuel gas heater, which diverges part of the mixed fuel gas, preheats the mixed fuel gas to a certain temperature, and adds reforming steam;
a multistage pre-converter, in which reforming reaction and methanation reaction of the mixed fuel gas occur simultaneously; and
a portion to supply the mixed fuel gas exiting the multistage pre-converter to the anode of the fuel cell
is provided.

According to a desirable embodiment of the present invention, the multistage pre-converter comprises two or more stages of reforming catalyst layers, wherein
reforming reaction and methanation reaction occur simultaneously in each reforming catalyst layer, consecutively, and after cooling by mixing part of the mixed fuel gas and reforming steam to outlet gas of each reforming catalyst layer, the gas is led to the reforming catalyst layer of the following stage;
hence, reforming reaction and methanation reaction are continued in two or more stages of the reforming catalyst layers, without external heating or cooling.

Moreover, in the the multistage pre-converter, the mixed fuel gas, which contains the reforming steam preheated by the fuel gas heater, is led to a first stage reforming catalyst layer, wherein reforming reaction of hydrocarbon gas contained in the externally-supplied fuel gas, and methanation reaction of hydrogen and carbon dioxide gas contained in the recycled fuel gas, occur simultaneously at a temperature range of 250-450 °C, and the reactions continue without external heating or cooling.

Furthermore, according to a desirable embodiment of the present invention, the system further comprises an exhaust heat recovery boiler that comprises a low-temperature shift catalyst layer and generates steam from the anode exhaust of the fuel cell, which collects reaction heat while increasing carbon dioxide by the shift reaction (CO+H₂O -> CO₂+H₂) in the low-temperature shift catalyst layer.

Furthermore, according to a desirable embodiment of the present invention, the system further comprises a cathode gas supplying system for supplying cathode gas to the fuel cell, wherein
the cathode gas supplying system comprises a closed loop, which comprises a recycling blower and circulates cathode gas of the fuel cell, an oxygen supplying equipment that supplies oxygen consumed by the power generation reaction to the closed loop, and a carbon dioxide supplying line that supplies the recycled carbon dioxide to the closed loop.

The oxygen supplying equipment consists of an air compressor that supplies air and an air separation equipment that separates oxygen from the air supplied and supplies oxygen to the closed loop.

Moreover, according to another embodiment, the oxygen supplying equipment consists of an air compressor that supplies air, and a low-temperature regenerated heat exchanger and a high-temperature regenerated heat exchanger for preheating air, and
air supplied from the air compressor is first preheated by the low-temperature regenerated heat exchanger, then mixed with the carbon dioxide supplied from the carbon dioxide supplying equipment, and then heated by the high-temperature regenerated heat exchanger, then further mixed with recycled gas from the recycling blower, before being supplied to the cathode entrance.

Said carbon dioxide supplying line further comprises a recycling carbon dioxide heater, wherein the recycled carbon dioxide is preheated by the anode exhaust.

Moreover, the carbon dioxide supplying line further comprises an oxidation catalyst layer, wherein the combustible gas contained in the recycled carbon dioxide is oxidized, after air is added to the recycled carbon dioxide.

### Effect of the Invention

According to the above-described composition of the present invention, the anode exhaust can be separated into carbon dioxide to be collected, recycled carbon dioxide that is recycled, and remaining recycled fuel gas, by the carbon dioxide separation system; therefore, carbon dioxide can be separated and collected, and the amount of carbon dioxide discharge can be reduced.
Moreover, since new fuel gas is mixed with recycled fuel gas and reused as a mixed fuel gas, without combusting the remaining fuel in the anode exhaust, the fuel gas, of which its main component is hydrogen, is used effectively, and power generation efficiency can be raised.

### Brief Description of Drawings

[Fig. 1] is a flow diagram of a conventional internal reforming MCFC power generation system.
[Fig. 2] is a configuration diagram of a first embodiment of the fuel cell power generation system of the present invention.
[Fig. 3] is a configuration diagram of a second embodiment of the fuel cell power generation system of the present invention.
[Fig. 4] is a flow diagram of the periphery of the multistage pre-converter 14 of Fig. 2.

### Description of Embodiments

Hereinafter, favorable examples of embodiments of the present invention are described with reference to the accompanying drawings. The same or corresponding portions are denoted by the same reference numerals, and overlapping descriptions are omitted.

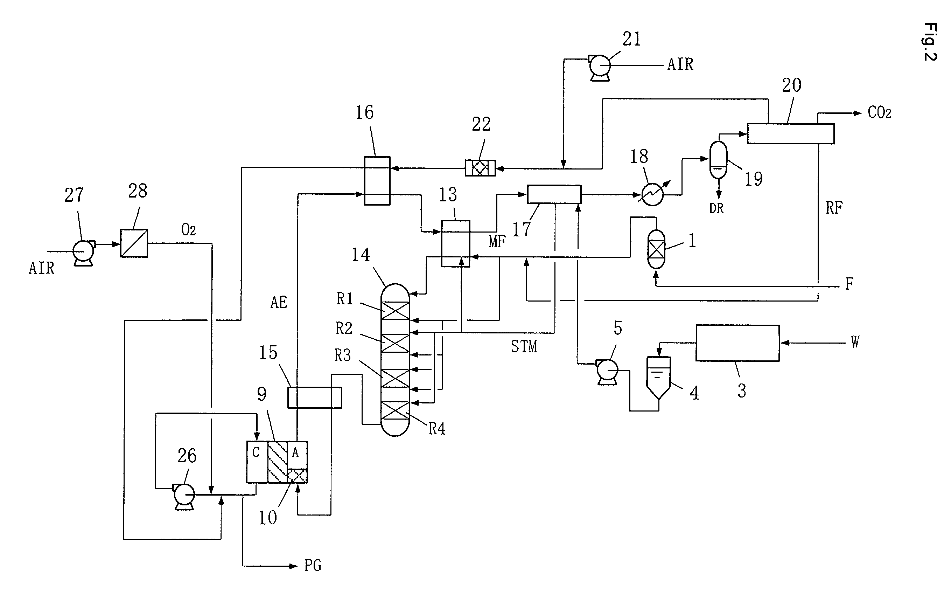

Fig. 2 is a configuration diagram of a first embodiment of the fuel cell power generation system of the present invention. An internal reforming molten carbonate fuel cell 9 is used in the fuel cell power generation system of the present invention. Hereafter, the internal reforming molten carbonate fuel cell 9 is referred to simply as the "fuel cell."
In this figure, the sulfur content in fuel gas F, such as urban gas, supplied externally (hereafter referred to simply as "new fuel gas F") is firstly removed by a desulfurizer 1; then, new fuel gas F is mixed with recycled fuel gas RF. Recycled fuel gas RF is the remaining gas obtained by cooling anode exhaust AE and partly separating carbon dioxide by a carbon dioxide separation system 20.

In this example, said mixed fuel gas MF is equally divided into four parts, and 1/4 of the mixed fuel gas MF is led to a fuel gas heater 13 and heated by the anode exhaust AE; meanwhile, reforming steam STM is supplied into the mixed fuel gas MF. Here, dividing the mixed fuel gas MF into four parts is merely one embodiment exemplifying the present invention, and in the spirit of the present invention, the mixed fuel gas may be divided into any number of equal parts; however, for the purpose of simplification, division into four equal parts will be applied hereinafter.
When mixed fuel gas MF is divided into four equal parts, reforming steam STM must also be divided into four equal parts and supplied to each stream, in order to balance the quantity of the mixed fuel gas MF. This steam is generated in an exhaust heat recovery boiler 17 from treated water obtained by pre-treating water supply W in a water treatment equipment 3, and sent via a treated water tank 4 and a pump 5.

In the fuel gas heater 13, 1/4 of mixed fuel gas MF and 1/4 of reforming steam STM are heated by the anode exhaust AE, and led to a first stage catalyst layer R1 of the multistage pre-converter 14. In the first stage catalyst layer R1, contents with mass larger than ethane in new fuel gas F are reformed, while simultaneously, H₂ and part of the carbon dioxide in the recycled fuel gas RF are methanated.
Although reforming reaction is an endothermic reaction and a methanation reaction is exothermic, in total, heat generation is larger, and the temperature of gas exiting the first stage catalyst layer R1 is considerably higher than that at the entrance.
Temperature is lowered by supplying and mixing 1/4 of the mixed fuel gas MF of low temperature, and reforming steam STM in an amount corresponding to that of mixed fuel gas MF, before being led to the 2nd stage catalyst layer R2 that follows.

Said process is repeated, and all of the mixed fuel gas MF and reforming steam STM pass through catalyst layers R1-R4 of the multistage pre-converter 14, whereby methane-rich fuel gas is obtained.
Details of the process of said multistage pre-converter 14 are the most important points of the present invention; here, the overall system will be described first, followed by a description of its details.

The fuel gas exiting the multistage pre-converter 14 is heated to a temperature somewhat lower than the working temperature of fuel cell 9, by the anode exhaust AE in a fuel gas heater 15, and is then supplied to the fuel cell 9. A reformer 10 in the shape of a thin plate is installed inside the fuel cell 9, every six to 8 cells, and fuel gas is supplied to the reformer 10.
Since the heat source for the reforming reaction in the reformer 10 is the heat generated in the power generation reaction of the fuel cell 9, its temperature is as low as around 600 °C; therefore, its rate of reforming is also low. Here, the fuel gas, in which half of its methane content has been reformed, is supplied to the anode A. The reforming catalyst is also arranged along the gas passage of the anode A, and the following reforming reaction and power generation reaction progress in parallel at the anode A.

| | |
|---|---|
| [reforming reaction: | CH₄ + H₂O -> CO + 3H₂, |
| | CO + H₂O -> CO₂ + H₂ ] |
| [power generation reaction: | H₂ + CO₃2⁻ -> H₂O + CO₂ + 2e⁻ ] |

While H₂O is consumed and H₂ is generated in the reforming reaction, H₂ is consumed and H₂O is generated in the power generation reaction. Therefore, because completely opposite reactions proceed simultaneously in parallel, equilibrium of the reforming reaction is affected, and even though the temperature is low, the rate of reformation is close to about 100%.

The ratio between the amounts of hydrogen obtained when all of the fuel gas supplied to the fuel cell is converted into hydrogen, and hydrogen used in the power generation reaction, is called the "fuel utilization ratio." Since the fuel utilization ratio of the internal reforming molten carbonate fuel cell 9 (fuel cell) is about 70%, the remaining 30% leaves the fuel cell 9 contained in the anode exhaust AE.

Since the temperature of the anode exhaust AE is almost the same as the working temperature of the fuel cell 9, it works as a heat source for the fuel gas heater 15, which first heats fuel gas exiting the multistage pre-converter 14 to a temperature somewhat lower than the working temperature of fuel cell 9.
On the other hand, part of the carbon dioxide separated by the carbon dioxide separation system 20 is collected, while the remainder is recycled to the cathode. This carbon dioxide that is recycled is especially called "recycled carbon dioxide RC."
Anode exhaust AE exiting the fuel gas heater 15 is then led to a recycling carbon dioxide heater 16, and heats the recycling carbon dioxide RC to a certain temperature.
Next, anode exhaust AE is led to the fuel gas heater 13, and heats 1/4 of the mixed fuel gas MF, and 1/4 of the reforming steam STM to a certain temperature. Subsequently, anode exhaust AE is led to an exhaust heat recovery boiler 17, wherein steam is generated.

In part of the exhaust heat recovery boiler 17, a low-temperature shift catalyst layer is installed, whereby carbon monoxide (CO) in the anode exhaust is reacted with steam to be converted to carbon dioxide (CO₂) and hydrogen (H₂). Since the reaction is an exothermic reaction, the exhaust heat recovery boiler 17 collects this reaction heat effectively, while converting carbon monoxide into carbon dioxide so that carbon dioxide recovery proceeds more effectively at the carbon dioxide separation system 20.

Anode exhaust AE exiting the exhaust heat recovery boiler 17 is led to a cooler 18, where it is cooled; then, part of the moisture is separated and collected in a knock out drum 19. Anode exhaust AE exiting the knock out drum 19 is led to the carbon dioxide separation system 20, where part of the carbon dioxide is separated and collected.

Although adsorption method using molecular sieves, absorption method using absorbing liquid, and liquefaction separation, etc. are known for the carbon dioxide separation system 20, here, method for carbon dioxide separation is not specified.
Part of the carbon dioxide separated by the carbon dioxide separation system 20 is collected, and the remainder is recycled as recycled carbon dioxide RC to the cathode. Moreover, as mentioned above, the rest of gas, from which carbon dioxide was separated, is mixed with new fuel gas F, as recycled fuel RF, and is used effectively as fuel for the fuel cell 9.
In Fig. 2, the line that supplies carbon dioxide from the carbon dioxide separation system 20 to the cathode of fuel cell 9, via a catalyst oxidizer 22 and a recycling carbon dioxide heater 16, is referred to as a "carbon dioxide supply line."

The fuel cell power generation system of the present invention is further equipped with a cathode gas supplying system, which supplies cathode gas to the fuel cell 9.
In Fig. 2, the cathode gas supplying system comprises: a closed loop, which comprises a recycling blower 26, and circulates cathode gas of the fuel cell 9; an oxygen supplying equipment, which supplies oxygen consumed by the power generation reaction to said closed loop; and a carbon dioxide supplying equipment, which supplies carbon dioxide consumed by the power generation reaction to said closed loop.

At the cathode of the fuel cell 9, oxygen consumed by the power generation reaction (CO₂ + 1/2O₂ + 2e⁻ -> CO₃²⁻) is replenished with oxygen O₂ generated by the oxygen supplying equipment (namely, air compressor 27 and air separation plant 28). Furthermore, carbon dioxide consumed by the power generation reaction is replenished with recycled carbon dioxide RC, which is separated by the carbon dioxide separation system 20 and recycled to the cathode.
The temperature of the cathode gas is higher at the exit than the entrance, due to the power generation reaction; however, by supplying and mixing oxygen, which is about normal temperature, and recycled carbon dioxide RC, which is preheated to a certain temperature, the temperature of said cathode gas is set back to the entrance temperature; thus, the composition is made simple.

### [Effect of Invention]

(1) According to the fuel cell power generation system comprising the above-described composition, 30% of the fuel gas that exists in the anode exhaust AE can be used effectively as recycled fuel gas RF; therefore, new fuel gas F supplied externally can be reduced to 70%, and power generation efficiency can be raised significantly.
(2) Moreover, since carbon dioxide can be separated and collected in this system, and carbon dioxide is hardly emitted into the atmosphere, the system can be highly effective for the improvement of earth environment.
(3) However, this system requires the carbon dioxide separation system 20 and the air separation equipment 28. Therefore, the effective power generation is the value obtained by subtracting the power consumed by such equipments from the power generated by the power generation equipment. If such power is less than or equal to 30% of the power generated by the power generation equipment, there should be a large merit in the fact that carbon dioxide is recoverable without dropping the power generation efficiency of the power generation equipment.
Hereinafter, technical points of the present invention, which have been devised in order to realize this system, are described.

### [Technical Points of the Present Invention]

In a conventional system as shown in Fig. 1, heat obtained by combusting fuel, remaining in about 30% of the anode exhaust, is utilized to realize the system. On the other hand, in the present invention, power generation efficiency is increased by using the remaining fuel effectively as fuel, without combustion. In order for this to be realized, the following two conditions are necessary.

### (1) Heat balance of the system

In order to realize heat balance of the system without combustion of the remaining fuel in the anode exhaust, energy that was wasted in the conventional system has to be used effectively, and energy must be used efficiently in the present invention, to cover for the remaining fuel in the anode exhaust.
In the conventional system, in the end, only the cathode exhaust take away heat from the fuel cell, and heat is given to the fuel side at the fuel gas heater 8 and the fuel humidifier 2; however, cathode exhaust E that is emitted to the atmosphere still contains energy, and it is necessary to use this energy effectively.
Therefore, in the present invention, the cathode is a closed loop, and anode exhaust AE is the only side that takes away energy from the fuel cell; energy contained in the anode exhaust AE is collected as much as possible by various heat exchangers.
In addition, hydrogen H₂ and carbon dioxide CO₂, which are the main components of the recycled fuel gas RF, are methanated, and its reaction heat is used effectively. Since methanation reaction is an exothermic reaction, it may be utilized as a heat source.

### (2) Heat balance of the fuel cell

Although the following power generation reactions proceed in the fuel cell 9, heat is generated at the same time that electricity is generated. Therefore, the fuel cell must be cooled for the heat generated.

| Power generation reaction: |
|---|
| Cathode reaction CO₂ + 1/2O₂ + 2e- -> CO₃²- |
| Anode reaction H₂ + CO₃²⁻ -> H₂O + CO₂ + 2e⁻ |
| Total reaction: H₂ + 1/2O₂ -> H₂O |

Exotherm Q at the fuel cell is represented as Q=ΔH-ΔG(V/V0), where combustion reaction heat is ΔH, free energy is ΔG, theoretical voltage is V0, and operation voltage is V. If the operating conditions of the fuel cell are the same for the conventional system and the system of the present invention, the amount of heat generation is the same, as well.
On the other hand, reforming reaction, sensible heat of gas flowing through anode and cathode, and heat loss are what cools the fuel cell. Their total must balance out with the heat generated by the fuel cell. Among these values, heat loss is inherent to the fuel cell itself, and is not affected by the system. Moreover, although the cathode of the present invention is a closed loop, if the flow rate, the composition, and the temperature at the entrance and exit of the fuel cell are the same as those of a conventional system, the cooling effect would also be the same.

The temperature of the cathode gas rises from the entrance towards the exit, and carbon dioxide and oxygen are consumed by the power generation reaction. In the present invention, oxygen O₂ consumed is supplied by the air separation equipment 28, and carbon dioxide is supplied by the recycled carbon dioxide RC. In such a case, by supplying and mixing oxygen at normal temperature and recycled carbon dioxide RC preheated to about 400 °C, the temperature at the cathode exit is set back to the temperature at the entrance.
Therefore, the cooling effect of the cathode is the same as in the conventional system. As for the rest, if the sensible heats of the reformation cooling and the anode gas are the same, the cooling effect of the fuel cell would be the same, too. If the S/C ratio (steam / carbon ratio) is the same and the flow rate of methane supplied to the fuel cell is the same, the cooling effect of the fuel cell would be the same, too. However, since 30% of the fuel gas is the recycled fuel gas RF, of which its main components are H₂ and carbon dioxide, there is only 70% of new fuel gas F, such as urban gas containing methane, supplied externally; thus cooling effect of the fuel cell cannot be attained.
Therefore, methanation of the recycled fuel gas RF is necessary. Since methanation is exothermic, by using this heat, the heat balance of the system and the heat balance of the fuel cell can both be obtained. The point of the present invention lies in the multistage pre-converter 14, which achieves this. Hereafter, detailed descriptions are given.

### (3) Multistage pre-converter 14 :

### a. Power generation reaction and fuel gas

In the fuel cell 9, the following power generation reactions proceeds, and the total reaction is the combustion of hydrogen.

| | |
|---|---|
| Cathode reaction: | CO₂ + 1/2O₂ + 2e- -> CO₃²⁻ |
| Anode reaction: | H₂ + CO₃²⁻ -> H₂O + CO₂ + 2e⁻ |
| Total reaction: | H₂ + 1/2O₂ -> H₂O |

Although about 60% of the reaction heat of hydrogen is directly converted into electricity, the remainder becomes heat. Therefore, it is necessary to cool the fuel cell.
On the other hand, in the internal reforming fuel cell 9, a reformer 10 is built into the fuel cell. Since the reforming reaction (CH₄ + H₂O -> CO + 3H₂) is an endothermic reaction, it is necessary to provide heat; however, in the internal reforming fuel cell 9, reforming is performed using the heat generated by the power generation reaction of the fuel cell. Thus, conversely said, the fuel cell is cooled by the reforming reaction. Therefore, the methane concentration of the fuel gas supplied determines the cooling capacity of the fuel cell; it is thus preferable that the fuel gas for the internal reforming fuel cell 9 has a high concentration of methane.

### b. The reaction and heat balance in the pre-converter

New fuel gas F, such as urban gas, contains methane as its main component and further contains ethane, propane, butane, etc. Moreover, the main components of the recycled fuel gas RF are hydrogen (H₂) and carbon dioxide (CO₂), and steam (H₂O) is contained depending on the carbon dioxide separation system 20.
If each of these is independently applied to a conventional pre-converter 6, the following problems may occur.

Since around 300 °C is desirable as the working temperature of the pre-converter 6, with new fuel gas F, methane is hardly reformed while components heavier than ethane are almost 100% reformed, due to chemical equilibrium.
In order to initiate reformation with only the sensible heat that gas contains, the fuel gas must be preheated to about 400 °C and supplied to the pre-converter 6, in which case, many heat sources would be needed for preheating.

On the other hand, although for recycled fuel gas methanation reaction is exothermic, in order to initiate the reaction, it must be preheated to about 250 °C, and requires a heating source. However, when the reaction is initiated, the temperature rises by heat generation, and as the temperature rises, methane concentration decreases, due to chemical equilibrium; also, if the catalyst temperature increases too much, the catalyst may be damaged.

Furthermore, unlike the conventional system shown in Fig. 1, the system of the present invention shown in Fig. 2 requires preheating of the recycled carbon dioxide RC; if each fuel gas is heated independently, many heat sources would be needed, and the anode exhaust alone will become insufficient, making the system inconceivable.

### (Multistage pre-converter 14 of the present invention)

In order to solve the aforementioned subjects, a system, wherein new fuel gas F supplied externally and recycled fuel gas RF are pre-mixed, reforming steam in an amount compatible to that of the mixed fuel gas is added, and then led to the multistage pre-converter 14, has been invented. By such a system, the endotherm of the reforming reaction and part of the exotherm of the methanation reaction can be canceled out.
However, in order to preheat these gases to about 250 °C, the initiation temperature of the reaction, many heat sources are still required; also, a problem remains in that the final achieving temperature of the reaction becomes too high and inhibits the increase of methane concentration. In order to keep the reaction temperature low in this method, external cooling is needed, making the pre-converter expensive and difficult to operate.

Thus, in the present invention, only 1/4 of the mixed fuel gas MF and reforming steam STM are heated to about 250 °C, which is the initiation temperature for the reaction, and fed to the first stage catalyst layer R1. Here, reaction proceeds towards the chemical equilibrium between the reformation product of methane and components heavier than ethane (H₂, CO, CO₂, H₂O), and the main components of the recycled fuel gas, H₂, CO₂, and H₂O. That is, the following reaction proceeds in either direction.

CH₄ + H₂O -> CO + 3H₂

The ratio of the amount of hydrogen obtained when all of the fuel gas supplied to the fuel cell is converted into hydrogen, and the amount of hydrogen utilized in the power generation reaction is called the "fuel utilization ratio." In an internal reforming fuel cell 9, this is about 70%. That is, 30% of hydrogen will be recycled, making the fuel gas 70%; hence, it may be said that about 30% of the mixed fuel gas MF supplied to the multistage pre-converter 14 is reformed. Since this is a state of over-reforming, the reaction in the multistage pre-converter 14 proceeds towards methanation. That is, as a total, the temperature rises by heat generation.

However, since the reforming reaction of components heavier than ethane in the fuel gas occurring simultaneously, as well as the mixing of gases, cause the sensible heat of the gas to increase, the degree of temperature rise is mitigated. Temperature is lowered by supplying and mixing 1/4 each of mixed fuel gas MF of almost-normal temperature and reforming steam STM of mitigated temperature, to the gas with increase temperature exiting the first stage catalyst layer R1; then the gas is led to the 2nd stage catalyst layer R2. By repeating such a process and passing through four stages of catalyst layers R1-R4, the requirement for heat source is diminished, reforming reaction and methanation reaction continue without external heating or cooling, and the final achieving temperature of the reaction can be lowered, thereby increasing methane concentration.

### (4) Heat balance

As has been described above, the size of the heat source of the fuel gas heater 13 is considerably decreased, and the quantity of reforming steam STM necessary to be generated by the exhaust heat recovery boiler 17 is reduced to 70%, because the amount of new fuel gas F that needs to be supplied externally is reduced to 70% by recycling the fuel gas in the anode exhaust; therefore, even though a recycled carbon dioxide heater 16 was added, the anode exhaust AE alone is now sufficient as the heat source, and the system of the present invention is attained.

(5) The system of the present invention remarkably increases power generation efficiency, with very little carbon dioxide emission to the atmosphere, and can greatly contribute to the effective use of resources and the improvement of earth environment.
   Furthermore, in Fig. 1, there were two heat exchangers between cathode exhaust, i.e. gas containing oxygen, and fuel gas, fuel gas heater 8 and fuel gas humidifier 2; however, the present invention does not contain such heat exchangers, and is hence, improved from a safety standpoint, as well.
(6) Moreover, the cathode gas only circulates through a closed loop with a cathode recycling blower 26, and is of a very simple composition. Since cathode gas is also effective in cooling the fuel cell, the outlet temperature is higher than the entrance temperature; however, by supplying and mixing oxygen of nearly normal temperature, and carbon dioxide preheated to about 400 °C to the outlet gas, the temperature is reduced to that of the entrance. Such temperature control is made possible by controlling the preheating temperature of carbon dioxide.
   On the other hand, when impure gas is contained in oxygen and carbon dioxide, certain amounts of purging becomes necessary; however, since the amount of purging is very small compared to the amount supplied, it can hardly be considered a problem from the viewpoint of carbon dioxide discharge.

(7) Moreover, although a small amount of combustible gas may be present in the recycled carbon dioxide RC depending on the carbon dioxide separation system 20, in such as case, by adding air in an amount equivalent to about 2 times that of the oxygen required to oxidize the combustible gas, and passing it through the oxidation catalyst layer, the combustible gas can be processed. Moreover, the quantity of nitrogen that is incorporated at this time is also slight, and hardly affects the composition of the cathode gas.
(8) Furthermore, since water is recoverable at the final stage of anode exhaust cooling in this system, external water supply is not necessary for the reforming steam except at start up; therefore, there is less restriction for location.

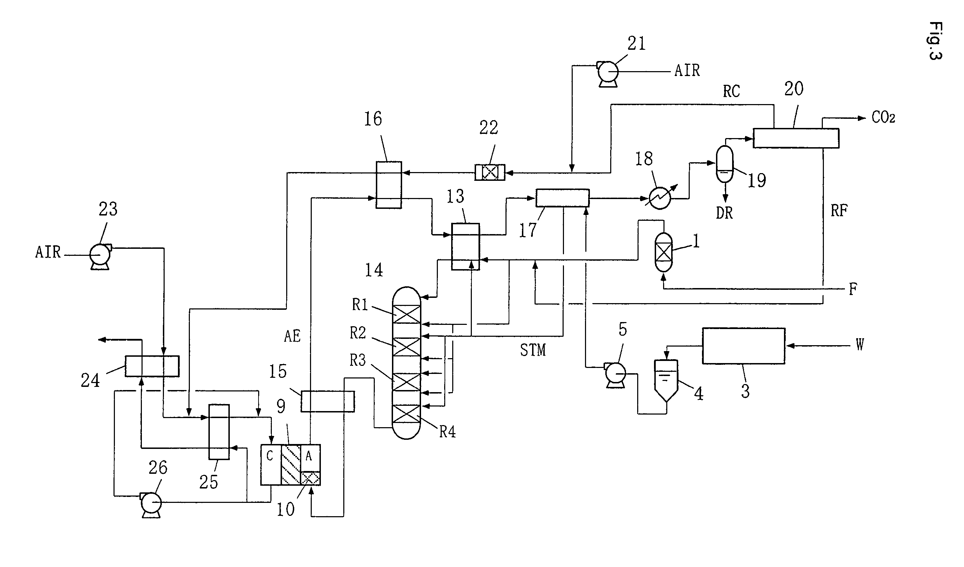

Fig. 3 is a total configuration diagram of the 2nd embodiment of the fuel cell power generation system of the present invention.
This embodiment is a system, which supplies oxygen supply to cathode by air. Since the fuel pretreatment system is exactly the same as that of Fig. 2, description is omitted.

The difference from the first embodiment is that among the carbon dioxide separated by the carbon dioxide separation system 20, the quantity of the carbon dioxide collected is half, at most, of the case in Fig. 1.
The carbon dioxide separated by the carbon dioxide separation system 20 is the sum of carbon dioxide that migrates from the cathode to the anode in the power generation reaction, and carbon dioxide that is generated from carbon in the fuel gas; however, if the carbon dioxide produced from the new fuel gas F supplied externally is completely collected, the amount of carbon dioxide in the cathode exit will become zero, and the power generation reaction will not proceed; therefore, only half of the carbon dioxide generated from fuel gas is recoverable.
However, since this system does not require the air separation equipment 28 of Fig. 2, the power needed within the system is reduced by the difference between its power and the power for the air blower, and is thus advantageous in that power generation efficiency improves; further, the amount of carbon dioxide emitted into the atmosphere is reduced to about 1/3 that of the system of Fig. 1.

On the other hand, the cathode gas system is completely different from that of Fig. 1, and is therefore described in detailed below.
Air AIR is supplied by the air blower 23. This air is heated by cathode exhaust in the low-temperature regenerated heat exchanger 24, and then mixed with the preheated recycled carbon dioxide RC. The air with recycled carbon dioxide RC mixed is again heated by the cathode exhaust in the high-temperature regenerated heat exchanger 25, after which it is mixed with cathode recycling gas and supplied to the cathode entrance.
At the cathode, carbon dioxide and oxygen are consumed by the power generation reaction, and becomes cathode exhaust. Part of the cathode exhaust is recycled to the cathode entrance by the cathode recycling blower 26, and the remainder is emitted to the atmosphere via the high-temperature regenerated heat exchanger 25 and the low-temperature regenerated heat exchanger 24. The fuel cell cooling effect by cathode gas does not change in this system, either. Moreover, in this cathode gas system, a heat exchanger with fuel gas does not exist, and is therefore a highly safe system.

### Example 1

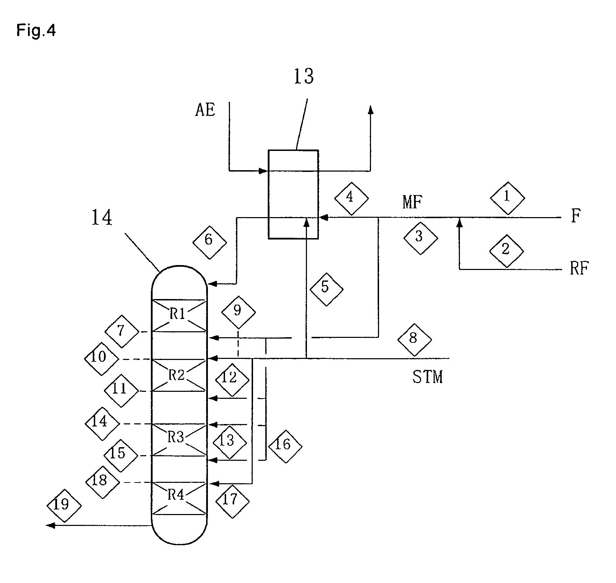

Fig. 4 is a flow diagram of the periphery of the multistage pre-converter 14 of Fig. 2. Moreover, an example of the heat balance and mass balance of Fig. 4 is shown in Table 1.

Table 1 shows the calculated result for an example, where a multistage pre-converter 14 with four stages of catalyst layers R1-R4 is used, with mixed fuel gas MF and reforming steam STM each divided into four parts, and the reaction onset temperature at the first stage in the fuel gas heater 13 is set at 250°C.
In addition, in Fig. 4, the numbers indicated in the <diamond> are stream numbers in this flow diagram and the state of each gas and their composition at major positions are shown in Table 1.

**[Table 1]**

| Steam Number | 1 | 2 | 4 | 6 | 7 | 11 | 15 | 19 |
|---|---|---|---|---|---|---|---|---|
| position | NF | RF | 13 entrance | 13 exit | R1 exit | R2 exit | R3 exit | R4 exit |
| Temperature (°C) | 15 | 15 | 15 | 250 | 416 | 375 | 358 | 350 |
| Pressure (ata) | 1.66 | 125 | 125 | 124 | 123 | 122 | 121 | 12 |
| Fbw rate (kgmol/H) | 20 | 6012 | 1553 | 2659 | 2492 | 4834 | 72.63 | 9553 |
| (Nm³/H) | 448 | 1348 | 415 | 596 | 556 | 1093 | 1628 | 2164 |

| Compostiton (mol% ) | | | | | | | | |
|---|---|---|---|---|---|---|---|---|
| CH₄ | 16 | 0.05 | 317 | 316 | 4.87 | 1029 | 1559 | 21.05 |
| C₂H5 (etc.) | 1*A* | | 036 | 036 | | | | |
| H₂ | | 2625 | 056 | 056 | 255 | 313 | 3.65 | 456 |
| CO | | 021 | 0.05 | 0.05 | 0.2 | 015 | 015 | 0.15 |
| CO₂ | | 33.61 | 5A | 5A | 7A2 | 1455 | 21.65 | 28.75 |
| H₂O | | | | 8.05 | 987 | 20.58 | 3125 | 41.97 |
| N₂ | | | | | | | | |
| O₂ | | | | | | | | |

Table 1 indicates that although the exit temperature of the first stage catalyst R1 is 416 °C under these conditions, the exit temperatures of the catalyst layer in the second to fourth stages are all 400 °C or less, and significant rise in temperature by the methanation reaction is not present. Moreover, the exit temperature of the final catalyst layer R4 is 350 °C, and the concentration of methane is high enough.
Furthermore, the value converted into the rate of methane reformation under this condition is about 5%, and the cooling effect of the fuel cell is satisfactory, too. The variation range of the working temperature is 250-416 °C, showing that extremely stable operation is possible.

### Industrial Applicability

The above-described fuel cell power generation system of the present invention has high power generation efficiency, and is suitable as a power supply that can significantly reduce the atmospheric discharge of carbon dioxide; thus, it could become popular as a new power-generation equipment from the viewpoint of effective use of resources, and improvement of earth environment. Hitherto, improvement of power generation efficiency and reduction of atmospheric discharge of carbon dioxide were considered for electric power company-oriented large-size power generation equipments; however, in reality, there is also an abundance of distributed power supplies, for which carbon dioxide reduction has progressed sluggishly. However, carbon dioxide reduction of distributed power supplies is now made achievable by the present invention.

The present invention is not limited to the above-described embodiments and various changes can be made without departing the scope of the present invention.

### List of Reference Signs

A anode, AE anode exhaust, AIR air,
C cathode, CE cathode exhaust,
DR condensed water, E exhaust,
F new fuel gas, MF mixed fuel gas,
PG purge gas,
R1 first stage catalyst layer, R2 second stage catalyst layer,
R3 third stage catalyst layer, R4 fourth stage catalyst layer,
RC recycled carbon dioxide,
RF recycled fuel gas,
STM vapor, W water supply,
1 desulfurizer, 2 fuel humidifier, 3 water treatment equipment,
4 treated water tank,
5 pump, 6 pre-converter, 7 reforming catalyst, 8 fuel gas heater,
9 fuel cell, 10 internal reformer,
11 a air blower, 11 b recycling blower,
12 catalyst oxidizer, 13 fuel gas heater,
14 multistage pre-converter, 15 fuel gas heater,
16 recycling carbon dioxide heater,
17 exhaust heat recovery boiler, 17a low-temperature shift catalyst layer,
18 cooler and 19 knockout drum,
20 carbon dioxide separation system, 21 air blower,
22 catalyst oxidizer, 23 air blower,
24 low-temperature regenerated heat exchanger,
25 high-temperature regenerated heat exchanger,
26 cathode recycling blower, 27 air compressor,
28 air separation plant

## Claims

1. A hydrogen-recycling MCFC power-generating system, comprising:
a molten carbonate fuel cell;
a carbon dioxide separation system that divides anode exhaust of the fuel cell into carbon dioxide to be collected, recycled carbon dioxide that is to be recycled, and remaining recycled fuel gas;
a fuel gas heater, which diverges part of a mixed fuel gas obtained by mixing new fuel gas to the recycled fuel gas, preheats the mixed fuel gas to a certain temperature, and adds reforming steam;
a multistage pre-converter, in which reforming reaction and methanation reaction of the mixed fuel gas occur simultaneously; and
a portion to supply the mixed fuel gas exiting the multistage pre-converter to the anode of the fuel cell.

2. The hydrogen-recycling MCFC power-generating system according to claim 1; wherein the multistage pre-converter comprises two or more stages of reforming catalyst layers, wherein
reforming reaction and methanation reaction occur simultaneously in each reforming catalyst layer, consecutively, and after cooling by mixing part of the mixed fuel gas and reforming steam to outlet gas of each reforming catalyst layer, the gas is led to the reforming catalyst layer of the following stage;
hence, reforming reaction and methanation reaction are continued in two or more stages of the reforming catalyst layers, without external heating or cooling.

3. The hydrogen-recycling MCFC power-generating system according to claim 1 or 2; wherein in the multistage pre-converter, the mixed fuel gas, which contains the reforming steam preheated by the fuel gas heater, is led to a first stage reforming catalyst layer, wherein reforming reaction of hydrocarbon gas contained in the externally-supplied fuel gas, and methanation reaction of hydrogen and carbon dioxide gas contained in the recycled fuel gas, occur simultaneously at a temperature range of 250-450 °C, and the reactions continue without external heating or cooling.

4. The hydrogen-recycling MCFC power-generating system according to claim 1; which further comprises an exhaust heat recovery boiler that comprises a low-temperature shift catalyst layer and generates steam from the anode exhaust of the fuel cell, which collects reaction heat while increasing carbon dioxide by the shift reaction (CO+H₂O -> CO₂+H₂) in the low-temperature shift catalyst layer.

5. The hydrogen-recycling MCFC power-generating system according to claim 1; which further comprises a cathode gas supplying system for supplying cathode gas to the fuel cell, wherein
the cathode gas supplying system comprises a closed loop, which comprises a recycling blower and circulates cathode gas of the fuel cell, an oxygen supplying equipment that supplies oxygen consumed by the power generation reaction to the closed loop, and a carbon dioxide supplying line that supplies the recycled carbon dioxide to the closed loop.

6. The hydrogen-recycling MCFC power-generating system according to claim 5; wherein the oxygen supplying equipment consists of an air compressor that supplies air, and an air separation equipment that separates oxygen from the air supplied and supplies oxygen to the closed loop.

7. The hydrogen-recycling MCFC power-generating system according to claim 5; wherein the oxygen supplying equipment consists of an air compressor that supplies air, and a low-temperature regenerated heat exchanger and a high-temperature regenerated heat exchanger for preheating air, and
air supplied from the air compressor is first preheated by the low-temperature regenerated heat exchanger, then mixed with the carbon dioxide supplied from the carbon dioxide supplying equipment, and then heated by the high-temperature regenerated heat exchanger, then further mixed with recycled gas from the recycling blower, before being supplied to the cathode entrance.

8. The hydrogen-recycling MCFC power-generating system according to claim 5; wherein the carbon dioxide supplying line further comprises a recycling carbon dioxide heater, wherein the recycled carbon dioxide is preheated by the anode exhaust.

9. The hydrogen-recycling MCFC power-generating system according to claim 5; wherein the carbon dioxide supplying line further comprises an oxidation catalyst layer, wherein the combustible gas contained in the recycled carbon dioxide is oxidized, after air is added to the recycled carbon dioxide.
